# NOUVEAU FASCICULE DE BREVET EUROPEEN

(11) **EP 1 426 216 B2**
(45) Date de publication et mention de la décision concernant l'opposition: **25.04.2018**
(45) Mention de la délivrance du brevet: 07.03.2007
(21) Numéro de dépôt: 03026422.0
(22) Date de dépôt: 19.11.2003
(51) Int. Cl.: B60H 3/06, B60H 1/28, B60H 1/00

(54) **Dispositif de traitement d'air compact pour véhicule automobile**
Kompakte Vorrichtung zur Behandlung der Luft für ein Kraftfahrzeug
Compact air treatment device for a motor vehicle

(30) Priorité: 02.12.2002 FR 0215146
(43) Date de publication de la demande: 09.06.2004
(73) Titulaire: VALEO SYSTEMES THERMIQUES, 78321 Le Mesnil St Denis Cedex (FR)
(72) Inventeur: Pouysegur, Serge, 78610 Le Perray en Yvelines (FR); Elliot, Gilles, 91080 Courcouronnes (FR); Naji, Said, 78990 Elancourt (FR)

(56) Documents cités:
- EP-A- 0 960 757
- DE-A- 19 957 618
- DE-C- 10 012 972
- DE-C- 19 651 669
- US-A- 5 518 449
- US-B1- 6 178 764
- US-B1- 6 604 992

## Description

L'invention concerne un dispositif de traitement d'air pour traiter de l'air à introduire dans l'habitacle d'un véhicule automobile, comprenant des moyens de séparation d'eau et des moyens de sélection entre air extérieur et air recirculé.

Un tel dispositif est décrit dans DE 10012972.

L'air traité par un tel dispositif sert couramment à la ventilation et/ou au chauffage, ou à la climatisation, de l'habitacle du véhicule. Les dispositifs connus présentent tout ou partie des inconvénients suivants:
- Les moyens précités sont disposés en différents endroits du véhicule. Ils doivent donc être montés séparément, ce qui augmente le coût du matériel et de la main-d'oeuvre, ainsi que l'encombrement du dispositif. Le circuit de l'air est long et complexe, ce qui augmente l'énergie nécessaire à la circulation et les émissions de bruit.
- La dispersion des moyens de sélection crée des variations de débit et de bruit entre le fonctionnement en air extérieur et le fonctionnement en air recirculé, ce qui nuit au confort des occupants,
- L'air recirculé n'est pas filtré.

Le but de l'invention est de remédier à ces inconvénients.

L'invention vise notamment un dispositif du genre défini en introduction, et prévoit que les moyens précités sont tous logés dans un boîtier commun fixé sur une cloison séparant le compartiment moteur de l'habitacle du véhicule.

L'invention fournit un dispositif de traitement d'encombrement réduit, économique à fabriquer et à installer. La réunion des composants et leur emplacement entraînent une diminution de l'énergie nécessaire à la circulation de l'air et des émissions de bruit.

Des caractéristiques optionnelles de l'invention, complémentaires ou de substitution, sont énoncées ci-après:
- Le boîtier commun est situé dans le compartiment moteur.
- Le boîtier commun est situé pour partie dans le compartiment moteur et pour partie dans l'habitacle.
- Le boîtier commun est situé dans l'habitacle.
- Le dispositif comprend en outre un ventilateur propre à aspirer l'air ayant traversé les moyens de filtration, disposé à proximité de ceux-ci dans l'habitacle.
- Le ventilateur possède un boîtier séparé fixé sur ledit boîtier commun ou sur ladite cloison.
- Le boîtier commun comprend des moyens de filtration.
- Ladite cloison présente un premier orifice pour le passage de l'air recirculé de l'habitacle aux moyens de sélection et un second orifice pour le passage de l'air des moyens de filtration au ventilateur.
- Ladite cloison présente un orifice commun à travers lequel lesdits boîtiers définissent un premier passage pour amener l'air recirculé de l'habitacle aux moyens de sélection et un second passage pour amener l'air des moyens de filtration au ventilateur.
- Le premier passage est annulaire et entoure le second passage.
- Le ventilateur est logé dans ledit boîtier commun.
- Le ventilateur comprend une roue de ventilateur et un moteur d'entraînement coaxial à celle-ci, le moteur d'entraînement faisant saillie axialement par rapport à la roue exclusivement du côté tourné vers les moyens de filtration.
- Le ventilateur comprend une roue de ventilateur et un moteur d'entraînement coaxial à celle-ci, le moteur d'entraînement faisant saillie axialement par rapport à la roue exclusivement du côté tourné à l'opposé des moyens de filtration.
- Les moyens de filtration comprennent au moins un filtre annulaire traversé par l'air de l'extérieur vers l'intérieur.
- Ledit filtre annulaire est coaxial à l'axe de rotation du ventilateur.
- Les moyens de sélection comprennent au moins deux organes de commutation espacés angulairement autour de l'axe dudit filtre annulaire et propres à être commandés en synchronisme pour mettre un espace annulaire entourant celui-ci en communication, soit avec une prise d'air extérieur, soit avec l'intérieur de l'habitacle.
- Les moyens de sélection comprennent deux organes de commutation disposés symétriquement l'un de l'autre par rapport à l'axe du filtre annulaire.
- Les parois internes du boîtier commun, ou de l'un au moins des deux boîtiers, sont recouvertes d'un matériau absorbant acoustique.

Les caractéristiques et avantages de l'invention seront exposés plus en détail dans la description ci-après, en se référant aux dessins annexés.

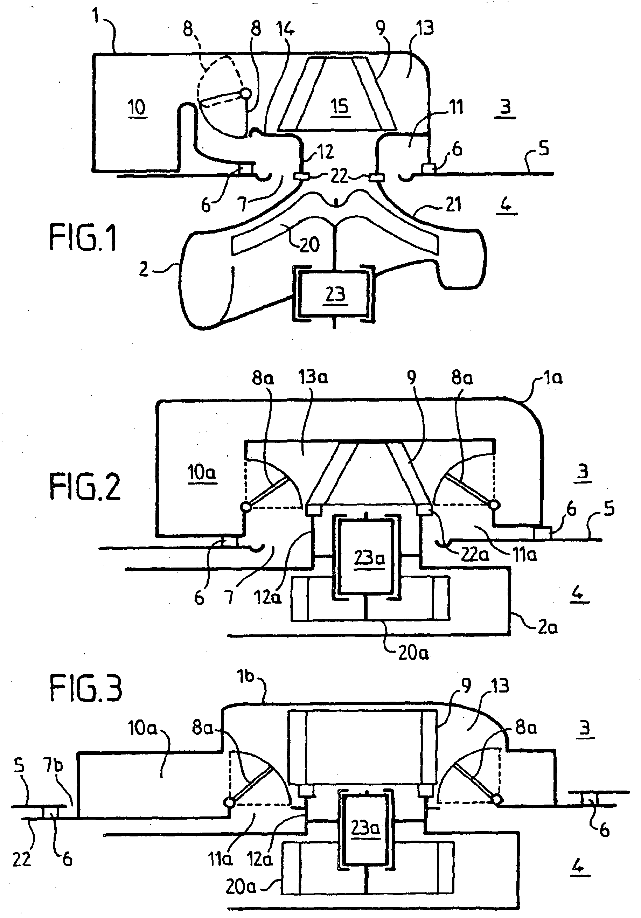

Les figures 1 à 6 sont des vues schématiques partielles en coupe de dispositifs selon l'invention.

Le dispositif représenté sur la figure 1 comprend deux boîtiers en matière plastique 1 et 2 disposés respectivement dans le compartiment moteur 3 et dans l'habitacle 4 d'un véhicule automobile, de part et d'autre d'une cloison en tôle métallique 5, appelée tablier, qui fait partie de la carrosserie du véhicule et sépare les compartiments 3 et 4. La référence 6 désigne des moyens de fixation étanche à l'air du boîtier 1 sur la cloison 5, entourant une ouverture circulaire 7 ménagée dans cette cloison. Un volet pivotant 8 et un filtre annulaire 9 sont représentés à l'intérieur du boîtier 1. Ces composants coopèrent avec les parois du boîtier pour définir quatre volumes distincts à l'intérieur de celui-ci. Un premier volume 10 communique avec une entrée d'air extérieur non représentée. Un second volume annulaire 11 entoure une paroi annulaire intérieure 12 du boîtier, coaxiale à l'ouverture 7, et communique avec la partie annulaire de cette dernière qui entoure la paroi 12. Un troisième volume annulaire 13 entoure le filtre annulaire tronconique 9, qui est coaxial à l'ouverture 7 et à la paroi 12, le volume 13 étant séparé du volume 11 par une paroi annulaire radiale 14 du boîtier. Le quatrième volume 15 se situe radialement à l'intérieur du filtre 9 et de la paroi 12.

Le boîtier 2 loge une roue de ventilateur 20. Il comprend une paroi annulaire 21 coaxiale à la paroi 12 et raccordée à celle-ci par des moyens de fixation étanche 22. La roue 20 est entraînée par un moteur électrique 23 qui lui est coaxial et dont le stator est fixé au boîtier 2, la roue étant disposée axialement entre le filtre et le moteur.

Le volet 8 peut se déplacer entre deux positions extrêmes. Dans la position représentée en trait plein, il complète la paroi 14 pour isoler l'un de l'autre les volumes 11 et 13, et libère un passage entre les volumes 10 et 13. Sous l'action d'aspiration du ventilateur 20, de l'air extérieur pénètre dans le volume 10 et de là dans le volume 13, puis traverse le filtre 9 pour parvenir dans le volume 15, à partir duquel le ventilateur l'envoie dans l'habitacle du véhicule après les étapes ultérieures éventuelles de traitement (refroidissement, chauffage, répartition entre différents points d'accès à l'habitacle).

Lorsque le volet 8 est dans la position représentée en trait interrompu, il libère un passage entre les espaces 11 et 13 et obture le passage entre les espaces 10 et 13. De l'air provenant de l'habitacle est donc aspiré, à travers l'ouverture 7, dans le volume 11 puis dans le volume 13, à partir duquel il parcourt le trajet décrit précédemment. Le volet 8 peut prendre des positions intermédiaires permettant le mélange d'air recirculé et d'air extérieur.

Des moyens connus, non représentés, pour séparer l'eau éventuellement contenue dans l'air extérieur, par exemple sous forme de gouttières ou de chicanes, sont prévus dans le volume 10.

Sur la figure 2, des éléments semblables à ceux de la figure 1 sont désignés par les mêmes références et ne seront donc pas décrits de nouveau, notamment le compartiment moteur 3, l'habitacle 4, la cloison 5, les moyens de fixation 6, l'ouverture annulaire 7 et le filtre annulaire tronconique 9.

La paroi annulaire cylindrique 12a qui guide l'air immédiatement en aval du filtre 9, contrairement à la paroi 12 de la figure 1, appartient au boîtier 2a du ventilateur et non pas au boîtier 1a qui loge le filtre. Les moyens de fixation étanche 22a des deux boîtiers sont donc décalés vers l'intérieur du compartiment moteur par rapport aux moyens de fixation 22. Le volume annulaire 11 de la figure 1, situé à l'intérieur du boîtier 1, est remplacé par un volume annulaire 11a situé à l'extérieur des deux boîtiers et délimité par les parois de ceux-ci et par la cloison 5. Le volume 10 est remplacé par un volume 10a qui entoure le volume 13a, analogue au volume 13, sur toute sa périphérie.

Le volet unique 8 de la figure 1 est remplacé par deux volets 8a disposés symétriquement l'un de l'autre par rapport à l'axe du filtre 9, de la paroi 12a et de la roue de ventilateur 20a. Ces deux volets se déplacent en synchronisme entre deux positions représentées en trait interrompu. Dans la position horizontale sur la figure, ils obturent des passages entre les volumes 11a et 13a et libèrent des passages entre les volumes 10a et 13a, permettant le traitement d'air recirculé. Dans la position verticale, ils libèrent les passages qui étaient obturés et obturent les passages qui étaient libérés, permettant le traitement d'air extérieur. Comme indiqué en trait plein, les volets 8a peuvent prendre des positions intermédiaires permettant le mélange d'air recirculé et d'air extérieur.

Ici, le moteur électrique 23a du ventilateur, dont le stator est fixé sur la paroi annulaire cylindrique 12a, est logé en partie à l'intérieur de la roue 20a et pour le reste fait saillie axialement par rapport à celle-ci exclusivement du côté du filtre 9, ce qui réduit l'encombrement axial du dispositif.

Le dispositif de la figure 3 diffère de celui de la figure 2 essentiellement en ce que les boîtiers 1a et 2a sont remplacés par un boîtier unique 1b, qui par conséquent s'étend de part et d'autre de la cloison 5, dans le compartiment moteur 3 et dans l'habitacle 4, et contient les volets 8a, le filtre 9, la roue 20a et le moteur 23a du ventilateur. L'ouverture 7b de la cloison 5 est ici suffisamment grande pour permettre le passage, lors du montage du dispositif sur le véhicule, de la partie du boîtier 1b qui trouve place dans le compartiment moteur 3. Le boîtier présente une bride annulaire radiale 22 qui fait saillie à sa périphérie et qui est reliée à la cloison 5 par les moyens de fixation étanche 6.

Le filtre annulaire 9 de la figure 3 est cylindrique et non tronconique comme ceux des figures 1 et 2, ce qui ne modifie en rien le fonctionnement du dispositif.

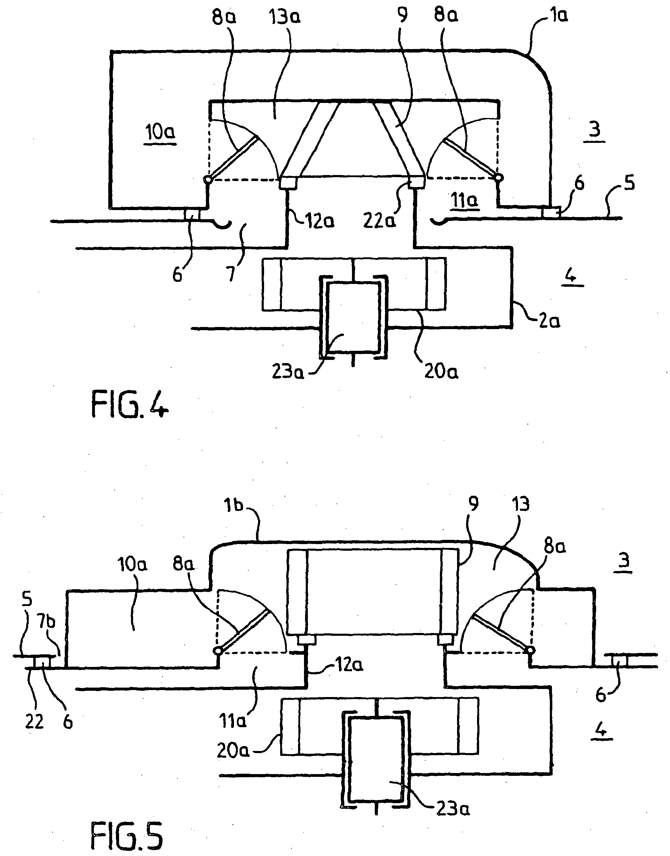

Les dispositifs représentés sur les figures 4 et 5 sont semblables à ceux des figures 2 et 3 respectivement, dont ils diffèrent par la disposition du moteur 23a, celui-ci étant logé en partie à l'intérieur de la roue 20a et pour le reste faisant saillie axialement par rapport à celle-ci exclusivement du côté opposé au filtre 9.

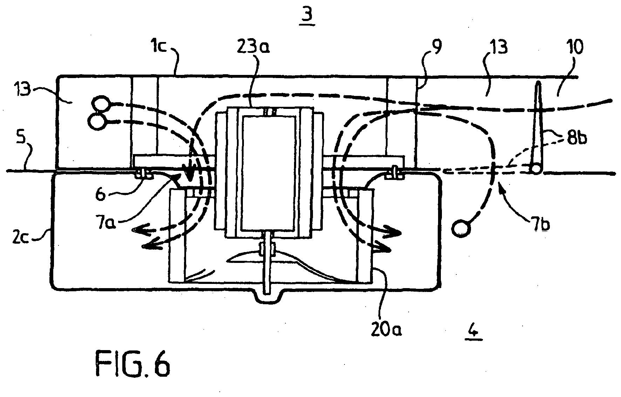

Le dispositif représenté sur la figure 6 comprend, comme ceux des figures 1, 2 et 4, deux boîtiers en matière plastique 1c et 2c disposés respectivement dans le compartiment moteur 3 et dans l'habitacle 4 du véhicule, de part et d'autre du tablier 5, auquel ils sont fixés ici conjointement par des moyens étanches 6 entourant une ouverture circulaire 7a. Comme sur la figure 3, un filtre annulaire 9 et une roue de ventilateur 20a sont disposés coaxialement à l'ouverture 7a, respectivement dans les boîtiers 1c et 2c. Le moteur 23a du ventilateur est logé en partie à l'intérieur de la roue 20a et en partie à l'intérieur du filtre 9, réduisant encore l'encombrement axial du dispositif.

Un volet pivotant unique 8b peut se déplacer entre une position représentée en trait plein, dans laquelle il isole l'un de l'autre des volumes 10 et 13 analogues à ceux de la figure 1, en libérant une seconde ouverture 7b du tablier 5, et une position représentée en trait interrompu, dans laquelle il obture l'ouverture 7b et libère le passage entre les espaces 10 et 13.

L'invention ne se limite pas aux modes de réalisation de dispositif de traitement d'air décrit précédemment, seulement à titre d'exemple, mais elle englobe toute les variantes que pourra envisager l'homme de l'art dans le cadre des revendications ci-après.

L'invention vise également un dispositif de traitement d'air comprenant des moyens de séparation d'eau et des moyens de sélection entre air extérieur et air recirculé décrits précédemment, logés dans un boîtier commun fixé sur une cloison séparant le compartiment moteur de l'habitacle du véhicule.

## Revendications

1. Dispositif de traitement d'air pour traiter de l'air à introduire dans l'habitacle d'un véhicule automobile, comprenant des moyens de séparation d'eau et des moyens de sélection (8, 8a) entre air extérieur et air recirculé et des moyens de filtration (9), logés dans un boîtier commun (1, 1a, 1b, 1c) fixé sur une cloison (5) séparant le compartiment moteur (3) de l'habitacle (4) du véhicule, **caractérisé en ce que** l'air recirculé pénètre dans le boîtier commun (1, 1a, 1b) à travers une ouverture (7, 7b) ménagée dans la cloison (5) et est filtré par les moyens de filtration (9).

2. Dispositif selon la revendication 1, dans lequel le boîtier commun (1, 1a, 1b, 1c) est situé dans le compartiment moteur (3).

3. Dispositif selon la revendication 1, dans lequel le boîtier commun (1, 1a, 1b, 1c) est situé pour partie dans le compartiment moteur (3) et pour partie dans l'habitacle (4).

4. Dispositif selon la revendication 1, dans lequel le boîtier commun (1) est situé dans l'habitacle (4).

5. Dispositif selon l'une des revendications précédentes, dans lequel le boîtier commun (1, 1a, 1b, 1c) comprend des moyens de filtration (9).

6. Dispositif selon la revendication 5, **caractérisé en ce qu'**il comprend en outre une roue de ventilateur (20, 20a) et un moteur d'entraînement (23a) propre à aspirer l'air ayant traversé les moyens de filtration (9), disposé à proximité de ceux-ci dans l'habitacle (4).

7. Dispositif selon la revendication 6, dans lequel la roue de ventilateur (20, 20a) est logée dans un boîtier séparé (2, 2a, 2c) fixé sur ledit boîtier commun (1, 1a) ou sur ladite cloison (5).

8. Dispositif selon la revendication 7, dans lequel ladite cloison présente un premier orifice (7b) pour le passage de l'air recirculé de l'habitacle aux moyens de sélection et un second orifice (7a) pour le passage de l'air des moyens de filtration au ventilateur.

9. Dispositif selon la revendication 7, dans lequel ladite cloison présente un orifice commun (7) à travers lequel lesdits boîtiers définissent un premier passage pour amener l'air recirculé de l'habitacle aux moyens de sélection et un second passage pour amener l'air des moyens de filtration au ventilateur.

10. Dispositif selon la revendication 9, dans lequel le premier passage est annulaire et entoure le second passage.

11. Dispositif selon la revendication 6, dans lequel le ventilateur (20a) est logé dans ledit boîtier commun (1b).

12. Dispositif selon l'une des revendications 6 à 11, dans lequel le moteur d'entraînement (23a) est coaxial à la roue de ventilateur (20a) et fait saillie axialement par rapport à la roue exclusivement du côté tourné vers les moyens de filtration (9).

13. Dispositif selon l'une des revendications 6 à 11, dans lequel le moteur d'entraînement (23a) est coaxial à la roue de ventilateur (20a) et fait saillie axialement par rapport à la roue exclusivement du côté tourné à l'opposé des moyens de filtration (9).

14. Dispositif selon l'une des revendications 5 à 13, dans lequel les moyens de filtration comprennent au moins un filtre annulaire (9) traversé par l'air de l'extérieur vers l'intérieur.

15. Dispositif selon la revendication 14, rattachée l'une des revendications 5 à 12, dans lequel ledit filtre annulaire (9) est coaxial à l'axe de rotation du ventilateur.

16. Dispositif selon l'une des revendications 14 ou 15, dans lequel les moyens de sélection comprennent au moins deux organes de commutation (8a) espacés angulairement autour de l'axe dudit filtre annulaire et propres à être commandés en synchronisme (20, 20a) pour mettre un espace annulaire (13) entourant celui-ci en communication, soit avec une prise d'air extérieur, soit avec l'intérieur de l'habitacle.

17. Dispositif selon la revendication 16, dans lequel les moyens de sélection comprennent deux organes de commutation (8a) disposés symétriquement l'un de l'autre par rapport à l'axe du filtre annulaire (9).

18. Dispositif selon l'une des revendications précédentes, dans lequel les parois internes du boîtier commun (1 ; 1b), ou de l'un au moins des deux boîtiers (1, 2), sont recouvertes d'un matériau absorbant acoustique.

## Patentansprüche

1. Luftbehandlungsvorrichtung zur Behandlung von Luft, die in die Fahrgastzelle eines Kraftfahrzeugs eingeführt werden soll, die Wassertrennmittel und Mittel (8, 8a) zur Auswahl zwischen Außenluft und umgewälzter Luft und Filtermittel (9) aufweist, die in einem gemeinsamen Gehäuse (1, 1a, 1b, 1c) angeordnet sind, das an einer Trennwand (5) befestigt ist, die den Motorraum (3) von der Fahrgastzelle (4) des Fahrzeugs trennt,
**dadurch gekennzeichnet, dass** die umgewälzte Luft über eine in der Trennwand (5) ausgebildete Öffnung (7, 7b) in das gemeinsame Gehäuse (1, 1a, 1b) eindringt und von den Filtermitteln (9) gefiltert wird.

2. Vorrichtung nach Anspruch 1, bei der das gemeinsame Gehäuse (1, 1a, 1b, 1c) sich im Motorraum (3) befindet.

3. Vorrichtung nach Anspruch 1, bei der das gemeinsame Gehäuse (1, 1a, 1b, 1c) sich zum Teil im Motorraum (3) und zum Teil in der Fahrgastzelle (4) befindet.

4. Vorrichtung nach Anspruch 1, bei der das gemeinsame Gehäuse (1) sich in der Fahrgastzelle (4) befindet.

5. Vorrichtung nach einem der vorhergehenden Ansprüche, bei der das gemeinsame Gehäuse (1, 1a, 1b, 1c) Filtermittel (9) aufweist.

6. Vorrichtung nach Anspruch 5, **dadurch gekennzeichnet, dass** sie weiter ein Ventilatorrad (20, 20a) und einen Antriebsmotor (23a) aufweist, zum Ansaugen der Luft, die die Filtermittel (9) durchquert hat, und angeordnet in deren Nähe in der Fahrgastzelle (4).

7. Vorrichtung nach Anspruch 6, bei der das Ventilatorrad (20, 20a) in einem getrennten Gehäuse (2, 2a, 2c) angeordnet ist, das am gemeinsamen Gehäuse (1, 1a) oder an der Trennwand (5) befestigt ist.

8. Vorrichtung nach Anspruch 7, bei der die Trennwand eine erste Öffnung (7b) für den Durchgang der umgewälzten Luft von der Fahrgastzelle zu den Auswahlmitteln und eine zweite Öffnung (7a) für den Durchgang der Luft von den Filtermitteln zum Ventilator aufweist.

9. Vorrichtung nach Anspruch 7, bei der die Trennwand eine gemeinsame Öffnung (7) aufweist, durch die hindurch die Gehäuse einen ersten Durchgang, um die umgewälzte Luft von der Fahrgastzelle zu den Auswahlmitteln zu bringen, und einen zweiten Durchgang definieren, um die Luft von den Filtermitteln zum Ventilator zu bringen.

10. Vorrichtung nach Anspruch 9, bei der der erste Durchgang ringförmig ist und den zweiten Durchgang umgibt.

11. Vorrichtung nach Anspruch 6, bei der der Ventilator (20a) im gemeinsamen Gehäuse (1b) angeordnet ist.

12. Vorrichtung nach einem der Ansprüche 6 bis 11, bei der der Antriebsmotor (23a) koaxial zum Ventilatorrad (20a) ist und axial bezüglich des Rads ausschließlich auf der Seite vorsteht, die zu den Filtermitteln (9) weist.

13. Vorrichtung nach einem der Ansprüche 6 bis 11, bei der der Antriebsmotor (23a) koaxial zum Ventilatorrad (20a) ist und axial bezüglich des Rads ausschließlich auf der Seite vorsteht, die entgegengesetzt zu den Filtermitteln (9) liegt.

14. Vorrichtung nach einem der Ansprüche 5 bis 13, bei der die Filtermittel mindestens ein ringförmiges Filter (9) aufweisen, das von der Luft von außen nach innen durchquert wird.

15. Vorrichtung nach Anspruch 14 zusammen mit einem der Ansprüche 5 bis 12, bei der das ringförmige Filter (9) koaxial zur Drehachse des Ventilators ist.

16. Vorrichtung nach einem der Ansprüche 14 oder 15, bei der die Auswahlmittel mindestens zwei Schaltorgane (8a) aufweisen, die mit Winkelabstand um die Achse des ringförmigen Filters herum angeordnet sind und synchron (20, 20a) gesteuert werden können, um einen dieses Filter umgebenden ringförmigen Raum (13) entweder mit einer Außenluftentnahme oder mit dem Inneren der Fahrgastzelle in Verbindung zu bringen.

17. Vorrichtung nach Anspruch 16, bei der die Auswahlmittel zwei Schaltorgane (8a) aufweisen, die bezüglich der Achse des ringförmigen Filters (9) symmetrisch zueinander angeordnet sind.

18. Vorrichtung nach einem der vorhergehenden Ansprüche, bei der die Innenwände des gemeinsamen Gehäuses (1; 1b) oder mindestens eines der zwei Gehäuse (1, 2) mit einem schallabsorbierenden Material bedeckt sind.

## Claims

1. Air treatment device for treating air to be inserted into the passenger compartment of a motor vehicle, comprising water separation means and means (8, 8a) for selecting between outside air and recirculated air and filtration means (9), housed in a common casing (1, 1a, 1b, 1c) attached to a partition (5) separating the engine compartment (3) from the passenger compartment (4) of the vehicle, **characterized in that** the recirculated air enters the common casing (1, 1a, 1b) through an opening (7, 7b) made in the partition (5) and is filtered by the filtration means (9).

2. Device according to Claim 1, in which the common casing (1, 1a, 1b, 1c) is situated in the engine compartment (3).

3. Device according to Claim 1, in which the common casing (1, 1a, 1b, 1c) is situated partly in the engine compartment (3) and partly in the passenger compartment (4) .

4. Device according to Claim 1, in which the common casing (1) is situated in the passenger compartment (4).

5. Device according to one of the preceding claims, in which the common casing (1, 1a, 1b, 1c) comprises filtration means (9).

6. Device according to Claim 5, **characterized in that** it also comprises a fan wheel (20, 20a) and a drive motor (23a), suitable for aspirating the air that has passed through the filtration means (9), placed close to the latter in the passenger compartment (4).

7. Device according to Claim 6, in which the fan wheel (20, 20a) is housed in a separate casing (2, 2a, 2c) attached to the said common casing (1, 1a) or to the said partition (5).

8. Device according to Claim 7, in which the said partition has a first orifice (7b) for the recirculated air to travel from the passenger compartment to the selection means and a second orifice (7a) for the air to travel from the filtration means to the fan.

9. Device according to Claim 7, in which the said partition has a common orifice (7) through which the said casings define a first passage to carry the recirculated air from the passenger compartment to the selection means and a second passage to carry the air from the filtration means to the fan.

10. Device according to Claim 9, in which the first passage is annular and surrounds the second passage.

11. Device according to Claim 6, in which the fan (20a) is housed in the said common casing (1b).

12. Device according to one of Claims 6 to 11, in which the drive motor (23a) is coaxial with the fan wheel (20a) and protrudes axially relative to the wheel exclusively on the side turned towards the filtration means (9).

13. Device according to one of Claims 6 to 11, in which the drive motor (23a) is coaxial with the fan wheel (20a) and protrudes axially relative to the wheel exclusively on the side turned away from the filtration means (9).

14. Device according to one of Claims 5 to 13, in which the filtration means include at least one annular filter (9) traversed by the air from the outside to the inside.

15. Device according to Claim 14, in combination with one of Claims 5 to 12, in which the said annular filter (9) is coaxial with the axis of rotation of the fan.

16. Device according to one of Claims 14 or 15, in which the selection means include at least two switching members (8a) spaced angularly about the axis of the said annular filter and capable of being controlled in synchronism (20, 20a) to put an annular space (13) surrounding the latter into communication either with an outside air intake or with the inside of the passenger compartment.

17. Device according to Claim 16, in which the selection means include two switching members (8a) placed symmetrically with one another relative to the axis of the annular filter (9).

18. Device according to one of the preceding claims, in which the internal walls of the common casing (1; 1b), or of at least one of the two casings (1, 2), are covered with a sound-absorbing material.
